(19) Europäisches Patentamt
European Patent Office
Office européen des brevets

(11) **EP 4 354 174 B1**

(12) **EUROPÄISCHE PATENTSCHRIFT**

(45) Veröffentlichungstag und Bekanntmachung des Hinweises auf die Patenterteilung:
**03.12.2025 Patentblatt 2025/49**

(51) Internationale Patentklassifikation (IPC):
**G01S 7/48** *(2006.01)* **G01S 17/933** *(2020.01)*
**G01S 17/34** *(2020.01)* **G01S 17/89** *(2020.01)*

(21) Anmeldenummer: **22200957.3**

(22) Anmeldetag: **11.10.2022**

(52) Gemeinsame Patentklassifikation (CPC):
**G01S 7/4808; G01S 7/4802; G01S 17/34; G01S 17/89; G01S 17/933**

(54) **VORRICHTUNG UND VERFAHREN ZUR POSITIONIERUNG EINES FLUGZEUGES**

DEVICE AND METHOD FOR POSITIONING AN AIRCRAFT

DISPOSITIF ET PROCÉDÉ DE POSITIONNEMENT D'UN AÉRONEF

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**17.04.2024 Patentblatt 2024/16**

(73) Patentinhaber: **SICK AG**
**79183 Waldkirch (DE)**

(72) Erfinder:
• **Ruh, Dominic**
**79102 Freiburg (DE)**
• **Wittmeier, Steffen**
**Waldkirch (DE)**

(56) Entgegenhaltungen:
**EP-A1- 3 757 968        EP-A1- 4 030 188**
**CN-A- 113 721 253        US-A1- 2022 066 025**
**US-A1- 2022 137 227**

**Beschreibung**

Die Erfindung betrifft eine Vorrichtung und ein Verfahren zur Positionierung eines Flugzeuges in einem Überwachungsbereich eines Vorfelds eines Flughafens, nach dem Oberbegriff von Anspruch 1 beziehungsweise Anspruch 11.

Aus dem Stand der Technik sind verschiedenste Systeme zur Positionierung von Flugzeugen auf einem Vorfeld eines Flughafens bekannt, insbesondere zum Andocken eines Flugzeugs an eine Fluggastbrücke. In der Regel wird dabei ein Flugzeug mit Hilfe optoelektronischer Sensoren erfasst, und der Flugzeugtyp anhand spezifischer Segmente des Flugzeugs und deren Form, beispielsweise der Form der Flugzeugnase (Radom), deren Abstand vom Boden, oder der Position und/oder Form der Triebwerke bestimmt. Unter Kenntnis der Abmessungen des Flugzeugstyps und der von den optoelektronischen Sensoren erfassten Position des Flugzeugs kann dann das Flugzeug zu einer vorbestimmten Parkposition geleitet oder das Andocken des Flugzeugs an die Fluggastbrücke gesteuert oder unterstützt werden. Dazu kann der Pilot des Flugzeugs beispielsweise durch ein Flughafen-Andock-Leitsystem unterstützt werden. Das Flughafen-Andockleitsystem besteht aus einem Display, das im Blickfeld des Piloten angebracht ist, um dem Piloten Informationen im Cockpit anzuzeigen, und einem LiDAR-Sensor, der die Position des Flugzeugs relativ zur Parkposition misst. Neben der Messung der Position des Flugzeugs in Bezug auf die Parkposition, muss der LiDAR-Sensor auch Informationen liefern, die die Klassifizierung des Flugzeugstyps anhand der erfassten Segmente des Flugzeugs ermöglichen, da die Parkposition vom Flugzeugtyp abhängt.

Die DE 4301637C2 beschreibt Verfahren zum Andocken eines Flugzeuges an eine Fluggastbrücke eines Flughafengebäudes durch Ortung und Führung des Flugzeuges von einer Ausgangsstellung zu einer Fluggastbrücke unter Verwendung einer Lasersender- und einer Laserempfangseinrichtung.

Die EP 2 109 065 B1 bezieht sich auf ein Verfahren zur Lokalisierung und Identifizierung von Objekten, insbesondere Flugzeugen auf einem Flugplatz und zum sicheren und effizienten Andocken von Flugzeugen an einem solchen Flughafen, wobei die Identifizierung in einem zweistufigen Verfahren erfolgt. Dabei wird zunächst ein Profil eines Flugzeugs erfasst und mit bekannten Profilen abgeglichen, und in einem zweiten Schritt Komponenten des Flugzeugs, beispielsweise ein Triebwerk erfasst und als Grundlage für die Unterscheidung zwischen Flugzeugen ausgewählt. Die Erfassung der Profile und Flugzeugkomponenten erfolgt mittels Laserentfernungsmessem.

Aus der US 7 702 453 B2 ist ein in Verfahren zum Leiten eines Flugzeugs zu einer Halteposition innerhalb eines Flugzeugstandplatzes eines Flughafens unter Verwendung eines Hochfrequenzsignals (RF) von einem RFID-Tag bekannt. Ein Laser-Entfernungsmesser kann das Verfahren unterstützen.

Die EP 1 015 313 B1 zeigt ein Dockingsystem für Flughafenterminals, mit einer Positioniervorrichtung als Teil eines Gate-Betriebssystems eines Flughafenterminals, mittels der ein Flugzeug in eine für seinen Bautyp vorgegebene Parkposition leitbar ist. Eine Videoeinrichtung, erfasst das Flugzeug bei Annäherung an das Flughafenterminal, und die erfassten Daten werden mit einer Datenbank abgeglichen, in der für unterschiedliche Bautypen von Flugzeugen jeweils Template-Datensätze abgespeichert sind.

In der US 2022/0066025 A1 wird ein System zur Vorfeldüberwachung beschrieben, umfassend ein Display und ein radarbasiertes System sowie zusätzliche Systeme, die aus laserbasierten und bildgebenden Systemen ausgewählt werden können. Diese Systeme arbeiten zusammen als ein kombiniertes System, um die Effizienz und Sicherheit bei der Abfertigung von Flugzeugen an Flughäfen zu verbessern.

Die EP 4 030 188 A1 bezieht sich auf eine Vorrichtung und ein Verfahren zum Absichern eines Überwachungsbereiches mit wenigstens einem FMCW-LiDAR-Sensor. Der FMCW-LiDAR-Sensor tastet eine Vielzahl von Messpunkten in einem Überwachungsbereich ab und erzeugt Messdaten aus von den Messpunkten remittiertem oder reflektiertem Sendelicht. Eine Steuer- und Auswerteeinheit wertet die Messdaten aus und erzeugt ein sicherheitsgerichtetes Signal basierend auf der Auswertung. Die Messdaten umfassen Radialgeschwindigkeiten der Messpunkte, und die Steuer- und Auswerteeinheit ist dazu ausgebildet, die Messpunkte unter Verwendung der Radialgeschwindigkeiten zu segmentieren und zu Objekten und/oder Objektsegmenten zusammenzufassen.

Aus der US 2022/137227 A1 ist ein System und Verfahren zur Überwachung und Steuerung von Fahrzeugen bekannt. Es umfasst Sensoren und Kommunikationsmodule, die in Fahrzeugen installiert sind, um deren Position, Geschwindigkeit und andere relevante Daten zu erfassen. Die Sensoren können einen kohärenten Lidar-Sensor umfassen, wie beispielsweise einen frequenzmodulierten Dauerstrich-Lidar-Sensor (FMCW).

Die EP 3 757 968 A1 zeigt eine Anordnung zum Erfassen eines Flugzeugs in einem Erfassungsbereich mit einem Fernmesssystem, beispielsweise einem LiDAR-System. Ein Controller bestimmt Positionen von Flugzeugaußenflächen und vergleicht sie mit Koordinaten einer Parkposition des Flugzeugs, um sicheres Parken zu gewährleisten. Bei Abweichungen kann ein Warnsignal zur Unfallvermeidung ein Warnsignal ausgegeben werden.

Die im Stand der Technik üblicherweise zur Erfassung des Flugzeugs verwendeten Bilderfassungssysteme, insbesondere Laserscanner und Kamerasysteme, weisen jedoch Nachteile auf, auf die im Folgenden näher eingegangen werden soll.

Laserscanner oder LiDAR (Light Detection And Ranging) - Sensoren basieren meist auf einer direkten Lichtlaufzeitmessung. Hierbei wird ein Lichtpuls vom Sensor ausgesandt, an einem Objekt reflektiert und wieder vom Sensor detektiert. Die Laufzeit des Lichtpulses wird vom Sensor bestimmt und über die Lichtgeschwindigkeit im Propagationsmedium (in der Regel Luft) die Entfernung zwischen Sensor und Objekt geschätzt. Da die Phase der elektromagnetischen Welle hierbei nicht berücksichtigt wird, spricht man von einem inkohärenten Messprinzip. Bei einer inkohärenten Messung besteht die Notwendigkeit, Pulse aus vielen Photonen aufzubauen, um den reflektierten Puls mit ausreichendem Signal-Rausch-Verhältnis zu empfangen. Die Anzahl der Photonen innerhalb eines Pulses ist im industriellen Umfeld in der Regel durch den Augenschutz nach oben limitiert. In der Folge ergeben sich Abwägungen zwischen maximaler Reichweite, minimaler Remission des Objektes, Integrationszeit und den Anforderungen an das Signal-Rausch-Verhältnis des Sensorsystems. Inkohärente Strahlung bei gleicher Wellenlänge (Umgebungslicht) wirkt sich zudem direkt auf den dynamischen Bereich des Lichtempfängers aus. Beispiele für inkohärente Strahlung bei gleicher Wellenlänge sind die Sonne, ähnliche Sensorsysteme, oder das identische Sensorsystem über eine Mehrwegeausbreitung, also unerwünschte Reflexionen.

Aus dem Stand der Technik bekannte Kamerasysteme basieren auf Messprinzipien wie beispielsweise der Stereoskopie oder der indirekten Lichtlaufzeitmessung. Bei der indirekten Lichtlaufzeitmessung wird die Phasendifferenz eines AMCW (Amplitude Modulated Continous Wave)-Sendesignals und dessen zeitlich verzögerter Kopie nach Reflektion mit einem Objekt bestimmt. Die Phasendifferenz entspricht der Lichtlaufzeit und kann über die Lichtgeschwindigkeit im Propagationsmedium in einen Distanzwert umgerechnet werden. Sowohl die Stereoskopie als auch die indirekte Lichtlaufzeitmessung sind jedoch nicht besonders robust gegenüber Sonneneinstrahlung und erreichen insbesondere unter Verwendung einer sogenannten Flash Beleuchtung, in der die gesamte Szene auf einmal beleuchtet wird, nicht die notwendige Reichweite für die Airport Docking Applikation. Insgesamt kann also die Genauigkeit der Detektion des Flugzeugs beziehungsweise der relevanten Merkmale wie Triebwerksposition oder Form der Flugzeugnase unbefriedigend sein und der Rechenaufwand für die Bildverarbeitung ist in der Regel hoch.

Es ist daher Aufgabe der Erfindung, eine Vorrichtung und ein Verfahren zur Positionierung eines Flugzeuges in einem Überwachungsbereich eines Vorfelds eines Flughafens, zu verbessern.

Diese Aufgabe wird durch eine Vorrichtung und ein Verfahren zur Positionierung eines Flugzeuges in einem Überwachungsbereich eines Vorfelds eines Flughafens, nach Anspruch 1 beziehungsweise 12 gelöst.

Eine Vorrichtung zur Positionierung eines Flugzeuges weist zur Erfassung des Flugzeugs zunächst wenigstens einen optoelektronischen Sensor auf, der Sendelichtstrahlen in einen Überwachungsbereich eines Vorfelds eines Flughafens aussendet. Die Sendelichtstrahlen tasten eine Vielzahl von Messpunkten im Überwachungsbereich ab, und der Sensor erzeugt Messdaten aus von den Messpunkten remittiertem oder reflektiertem Sendelicht. Zur Abtastung des Überwachungsbereichs kann der Sensor fachübliche Strahlablenkungsmittel aufweisen und beispielsweise als Scanner mit wenigstens einem beweglichen Ablenkspiegel ausgeführt sein.

Eine Steuer- und Auswerteeinrichtung ist dazu eingerichtet die erzeugten Messdaten auszuwerten, wobei zunächst eine Segmentierung der Messpunkte erfolgt und die Messpunkte zumindest teilweise zu Segmenten des Flugzeuges zusammengefasst werden. "Zumindest teilweise" bedeutet in diesem Zusammenhang, dass ein Teil der im Überwachungsbereich abgetasteten Messpunkte Objekte betreffen kann, die nicht Teil des Flugzeugs sind, beispielsweise auf dem Vorfeld befindliche Personen, Fahrzeuge, oder auch das Vorfeld selbst. Die Segmentierung kann nach bekannten Verfahren der digitalen Bildverarbeitung beziehungsweise des maschinellen Sehens erfolgen, wie beispielsweise

- Pixelorientierte Verfahren im Grauwertbild mittels Schwellenwert-Verfahren,
- Kantenorientierte Verfahren wie dem Sobel- oder Laplace-Operator und einer Gradientensuche,
- Regionenorientierte Verfahren wie "Region-Growing", "Region-Splitting", "Pyramid Linking" oder "Split and Merge",
- Modellbasierte Verfahren wie bspw. die Hough-Transformation, oder
- Texturorientierte Verfahren.

Weiterhin sind unter dem Begriff "Range segmentation" spezielle Verfahren zur Segmentierung von dreidimensionalen Datensätzen bekannt. Die "Range segmentation" ist beispielsweise in den folgenden wissenschaftlichen Veröffentlichungen beschrieben:

- "Fast Range Image-Based Segmentation of Sparse 3D Laser Scans for Online Operation" (Bogoslavskyi et al., 2016 IEEE/RSJ International Conference on Intelligent Robots and Systems, DOI: 10.1109/IROS.2016.7759050)
- "Laser-based segment classification using a mixture of bag-of-words". (Behley et al., 2013 IEEE/RSJ International Conference on Intelligent Robots and Systems, DOI: 10.1109/IROS.2013.6696957)
- "On the segmentation of 3d lidar point clouds" (Douillard et al., 2011 IEEE International Conference on Robotics and Automation, DOI: 10.1109/ICRA.2011.5979818)

Darüber hinaus können Algorithmen des maschinellen Lernens verwendet werden, um Segmente des Flugzeugs oder das komplette Flugzeug zu detektieren. Hierzu kommen nach aktuellem Stand der Wissenschaft sog. Deep Neural Networks zum Einsatz. Beispiele für solche Verfahren sind beispielsweise in folgenden wissenschaftlichen Veröffentlichungen beschrieben:

- Guo, Yulan, et al. "Deep learning for 3d point clouds: A survey." IEEE transactions on pattern analysis and machine intelligence 43.12 (2020): 4338-4364.
- Lang, Alex H., et al. "Pointpillars: Fast encoders for object detection from point clouds." Proceedings of the IEEE/CVF conference on computer vision and pattern recognition. 2019.
- Yan, Yan, Yuxing Mao, and Bo Li. "Second: Sparsely embedded convolutional detection." Sensors 18.10 (2018): 3337.

Als Segmente des Flugzeuges sind insbesondere solche Teile des Flugzeugs zu verstehen, die aufgrund von Merkmalen wie Form und/oder Position charakteristisch für einen bestimmten Flugzeugtyp sind, beispielsweise Triebwerke, Fahrwerk, Cockpitfenster oder Leitwerk. Der Begriff "Segment des Flugzeuges" kann auch einen Umriss des Flugzeugs umfassen, sofern das Flugzeug in seiner Gesamtheit vom Sensor erfasst wird.

Die Steuer- und Auswerteeinheit ist daher weiterhin dazu ausgebildet, Merkmale der Segmente zu extrahieren, die Segmente anhand der extrahierten Merkmale einem Flugzeugtyp aus einer Vielzahl von Flugzeugtypen zuzuordnen und basierend auf dem zugeordneten Flugzeugtyp eine Positionierungsinformation für das Flugzeug auszugeben, beispielsweise einen Abstand und/oder eine Richtung zu einer vorbestimmten, flugzeugtypspezifischen Parkposition. Zur Zuordnung der Segmente zu einem Flugzeugtyp kann die Steuer- und Auswerteeinheit dazu eingerichtet sein, Informationen über flugzeugtypspezifische Segmente zu empfangen, beispielsweise aus einer Datenbank. Die Datenbank kann Teil der Vorrichtung oder der Steuer- und Auswerteeinheit selbst sein, Teil einer IT-Infrastruktur des Flughafens, oder auch in einer Cloud vorliegen.

Erfindungsgemäß ist der optoelektronische Sensor, als frequenz-modulierter-Dauerstrich (Frequency Modulated Continuous Wave, FMCW) - LiDAR-Sensor ausgebildet. Grundlagen der FMCW-LiDAR Technologie sind beispielsweise in der wissenschaftlichen Veröffentlichung "Linear FMCW Laser Radar for Precision Range and Vector Velocity Measurements" (Pierrottet, D., Amzajerdian, F., Petway, L., Barnes, B., Lockard, G., & Rubio, M. (2008). Linear FMCW Laser Radar for Precision Range and Vector Velocity Measurements. MRS Proceedings, 1076, 1076-K04-06. doi:10.1557/PROC-1076-K04-06) oder der Doktorarbeit "Realization of Integrated Coherent LiDAR" (T. Kim, University of California, Berkeley, 2019. https://escholarship.org/uc/item/1d67v62p) beschrieben.

Im Gegensatz zu auf Lichtlaufzeitmessung von Laserpulsen basierenden LiDAR-Sensoren oder Laserentfernungsmessern sendet ein FMCW-LiDAR-Sensor keine gepulsten, sondern kontinuierliche Sendelichtstrahlen in einen Überwachungsbereich aus, die während einer Messung, also einer zeitdiskreten Abtastung eines Messpunktes im Überwachungsbereich, eine vorgegebene Frequenzmodulation, das heißt eine zeitliche Änderung der Wellenlänge des Sendelichts, aufweisen. Die Messfrequenz eines gesamten Frames, der aus 100.000 Messpunkten und mehr bestehen kann, liegt dabei typischerweise im Bereich von 10 bis 30 Hz. Die Frequenzmodulation kann beispielsweise als periodische Auf- und Abwärtsmodulation ausgebildet sein. Von Messpunkten im Überwachungsbereich reflektiertes Sendelicht weist im Vergleich zum ausgestrahlten Sendelicht einen Zeitversatz entsprechend der Lichtlaufzeit auf, die von der Entfernung des Messpunktes vom Sensor abhängt und aufgrund der Frequenzmodulation mit einer Frequenzverschiebung einhergeht. Im FMCW-LiDAR-Sensor werden ausgestrahltes und reflektiertes Sendelicht kohärent überlagert, wobei aus dem Überlagerungssignal die Entfernung des Messpunktes vom Sensor bestimmt werden kann. Das Messprinzip der kohärenten Überlagerung hat im Vergleich zu gepulsten oder amplitudenmodulierten inkohärenten LiDAR-Messprinzipien unter anderem den Vorteil einer erhöhten Immunität bezüglich Fremdlicht von beispielsweise anderen optischen Sensoren/Sensorsystemen oder der Sonne.

Bewegt sich ein Messpunkt mit einer Radialgeschwindigkeit auf den Sensor zu oder vom Sensor weg, weist das reflektierte Sendelicht zusätzlich eine Dopplerverschiebung auf. Diese Veränderung der Sendelichtfrequenz kann ein FMCW-LiDAR-Sensor bestimmen und daraus die Entfernung und die Radialgeschwindigkeit eines Messpunkts in einer einzigen Messung, also einer einmaligen Abtastung eines Messpunktes, bestimmen, während bei einem auf Lichtlaufzeitmessung von Laserpulsen basierenden LiDAR-Sensor für eine Bestimmung der Radialgeschwindigkeit wenigstens zwei Messungen, also zwei zeitlich beabstandete Abtastungen des gleichen Messpunktes, nötig sind.

Bei zeit- und raumdiskreter Abtastung eines dreidimensionalen Überwachungsbereichs kann ein FMCW-LiDAR-Sensor folgende Messdaten erfassen beziehungsweise erzeugen:

$$M_{j,k,l} = \begin{pmatrix} r_{j,k,l} \\ v^{r}_{j,k,l} \\ I_{j,k,l} \end{pmatrix}.$$

Hierbei bezeichnen $r_{j,k,l}$ den Radialabstand, $v^{r}_{j,k,l}$ die Radialgeschwindigkeit und $I_{j,k,l}$ die Intensität jedes raumdiskreten Messpunktes $j,k$ mit zweidimensionaler, durch Azimuthwinkel $\varphi$ und Polarwinkel $\theta$ angegebener Position $(\varphi_j, \theta_k)$ für jede zeitdiskrete Abtastung $l$. Zur einfachen Lesbarkeit wird im Folgenden der Index $n$ für eine einmalige zeitdiskrete Abtastung eines raumdiskreten, zweidimensionalen Messpunkts $(\varphi_j, \theta_k)$ im drei-

dimensionalen Überwachungsbereich verwendet. Die vom FMCW-LiDAR-Sensor erzeugten Messdaten umfassen somit zusätzlich zu den Orts- und Intensitätsinformationen der Messpunkte deren Radialgeschwindigkeiten.

Im Falle von single-mode emittierenden FMCW-LiDAR-Sensoren können sehr kleine Laserstrahlen mit Durchmessern im Bereich von Millimetern zur Abtastung des Messbereichs erzeugt werden. Aufgrund der hohen Messinformationsdichte des FMCW-LiDAR-Sensors können weniger komplexe und robustere Algorithmen verwendet werden, um eine Positionierungsinformation eines Flugzeugs relativ zur Parkposition zu bestimmen.

Die Steuer- und Auswerteeinheit kann dazu ausgebildet sein, die Messpunkte unter Verwendung der Radialgeschwindigkeiten der Messpunkte zu segmentieren. Durch die Verwendung der ortsaufgelösten Radialgeschwindigkeit als zusätzlichem Parameter zu den üblichen Orts- und Intensitätsinformationen der Messpunkte ist eine verbesserte Segmentierung der Messdaten möglich.

Die Steuer- und Auswerteeinheit ist dazu ausgebildet, unter Verwendung von ortsaufgelösten Radialgeschwindigkeiten von wenigstens einem ersten Segment zugeordneten Messpunkten ein Bewegungsmuster des ersten Segments zu bestimmen. Als Bewegungsmuster ist eine charakteristische Eigenbewegung des Segments, in Form einer Rotation oder einer Relativbewegung des Segments zum Flugzeug selbst oder zu einem weiteren Segment, zu verstehen, welche sich durch ein Radialgeschwindigkeitsprofil der dem Segment zugeordneten Messpunkte ergibt. Eine entsprechende charakteristische Eigenbewegung beziehungsweise charakteristisches Radialgeschwindigkeitsprofil kann beispielsweise als vorbestimmtes Bewegungsmuster in der Steuer- und Auswerteeinheit gespeichert, in einem Einlernvorgang erfasst oder während des Betriebs der Vorrichtung mittels Methoden des maschinellen Lernens oder künstlicher Intelligenz bestimmt werden.

Die Verwendung der ortsaufgelösten Radialgeschwindigkeiten zur Bestimmung eines Bewegungsmusters der einem ersten Segment zugeordneten Messpunkte hat den Vorteil, dass sich das Bewegungsmuster des Segments schnell und zuverlässig bestimmen lässt.

Die Bestimmung eines Bewegungsmusters eines Segments, insbesondere die Bestimmung einer Relativbewegung zwischen verschieden Segmenten oder von Segmenten zum Flugzeug selbst kann beispielsweise dazu verwendet werden, die rotierenden Triebwerksschaufeln und somit das Triebwerk des Flugzeugs zu identifizieren.

Anhand der Bewegungsmuster von Rädern des Flugzeugs kann beispielsweise die Erkennung des Fahrwerks des Flugzeugs verbessert werden, da sich die Bewegungsmuster der Räder vom Bewegungsmuster des Flugzeugrumpfes unterscheiden. Da in der Regel das Bugfahrwerk andere Reifengrößen als das Hauptfahrwerk aufweist, unterscheiden sich auch die Bewegungsmuster der entsprechenden Räder, so dass eine verbesserte Unterscheidung und Lokalisierung von Haupt- und Bugfahrwerk möglich ist.

In einer Ausführungsform kann die Steuer- und Auswerteeinheit dazu ausgebildet sein, die Messdaten unter Verwendung der Radialgeschwindigkeiten der Messpunkte zu filtern. Somit kann bereits vor einer Segmentierung der Messpunkte der Rechenaufwand durch Datenreduktion vermindert werden. Eine Filterung kann beispielsweise dadurch erfolgen, dass Messpunkte mit einer Radialgeschwindigkeit kleiner, größer oder gleich einem vorgegebenen Schwellenwert verworfen und keiner weiteren Auswertung zugeführt werden. Dadurch können beispielsweise zu einem in Bewegung befindlichen Flugzeug gehörige Messpunkte von solchen getrennt werden, die zu einem statischen Hintergrund gehören und damit die Datenmenge für folgende Verarbeitungsschritte reduziert werden.

In einer Ausführungsform kann die Steuer- und Auswerteeinheit dazu ausgebildet sein, unter Verwendung der Radialgeschwindigkeit der Messpunkte eine Geschwindigkeit des Flugzeugs zu ermitteln und die ermittelte Geschwindigkeit mit einem vorgegebenen Geschwindigkeitslimit zu vergleichen, wobei die Positionierungsinformation für das Flugzeug dann die Geschwindigkeit des Flugzeugs und/oder eine Information über eine Überschreitung des vorgegebenen Geschwindigkeitslimits enthalten kann. Die Geschwindigkeit beziehungsweise ein 3D Geschwindigkeitsvektor des Flugzeugs kann beispielsweise durch das in "Doppler velocity-based algorithm for Clustering and Velocity Estimation of moving objects (Guo et al., 2022)" beschriebene Verfahren zur Schätzung der Geschwindigkeit berechnet werden.

Der FMCW-LiDAR-Sensor kann zusätzlich dazu eingerichtet sein, polarisationsabhängige Intensitäten des von den Messpunkten reflektierten oder remittierten Sendelichts zu erfassen. Dazu weist der FMCW-LiDAR-Sensor eine Auskopplungseinheit auf, die dazu ausgebildet ist, wenigstens einen Teil des von den Messpunkten im Überwachungsbereich reflektierten oder remittierten Sendelichts, im Folgenden auch als Empfangslicht bezeichnet, auszukoppeln und auf einen Polarisationsanalysator zu leiten. Der Polarisationsanalysator ist dazu eingerichtet, die polarisationsabhängigen Intensitäten des Empfangslichts zu messen, beispielswiese durch polarisationsabhängiges Aufteilen des Empfangslichts mit einem polarisierenden Strahlteilerwürfel oder einer Metaoberfläche, und Messen der Intensitäten des aufgeteilten Empfangslichts durch geeignete Detektoren.

Bei zeit- und raumdiskreter Abtastung eines dreidimensionalen Überwachungsbereichs kann ein derart eingerichteter FMCW-LiDAR-Sensor somit folgende Messdaten erfassen:

$$M_{j,k,l} = \begin{pmatrix} r_{j,k,l} \\ v^r_{j,k,l} \\ I_{\perp j,k,l} \\ I_{\parallel j,k,l} \end{pmatrix}.$$

Hierbei bezeichnen $r_{j,k,l}$ den Radialabstand, $v^r_{j,k,l}$ die Radialgeschwindigkeit sowie $I_{\perp j,k,l}$ und $I_{\parallel j,k,l}$ die polarisationsabhängigen Intensitäten jedes raumdiskreten Messpunktes $j$, $k$ **mit zweidimensionaler,** durch Azimutwinkel $\varphi$ und Polarwinkel $\theta$ angegebener Position $(\varphi_j, \theta_k)$ für jede zeitdiskrete Abtastung $l$. Zur einfachen Lesbarkeit wird im Folgenden der Index $n$ für eine einmalige zeitdiskrete Abtastung eines raumdiskreten, zweidimensionalen Messpunkts $(\varphi_j, \theta_k)$ im dreidimensionalen Überwachungsbereich verwendet.

Zur Auswertung der vom FMCW-LiDAR-Sensor zusätzlich erfassten polarisationsabhängigen Intensitäten kann die Steuer- und Auswerteeinheit dazu ausgebildet sein, die Messpunkte unter Verwendung der ortsaufgelösten Radialgeschwindigkeit der Messpunkte und den polarisationsabhängigen Intensitäten des von den Messpunkten reflektierten oder remittierten Sendelichts zu segmentieren und Segmenten des Flugzeugs zuzuordnen.

Durch die Verwendung der ortsaufgelösten Radialgeschwindigkeit und den polarisationsabhängigen Intensitäten des von den Messpunkten reflektierten oder remittierten Sendelichts als zusätzliche Parameter ist eine weiter verbesserte Segmentierung der Messdaten möglich. Beispielsweise kann durch Auswertung der polarisationsabhängigen Intensitäten eine verbesserte Erkennung von Cockpitfenstern eines Flugzeuges erfolgen, da von den Fensterscheiben der Cockpitfenster reflektierte Sendelichtstrahlen sich hinsichtlich der polarisationsabhängigen Intensitäten von Sendelichtstrahlen, die vom Rumpf des Flugzeuges reflektiert wurden, unterscheiden.

Der FMCW-LiDAR-Sensor kann an einer Fluggastbrücke angeordnet sein und einen vorgegebenen Überwachungsbereich, beispielsweise das der Fluggastbrücke vorgelagerte Vorfeld abtasten. Vorzugsweise kann wenigstens ein weiterer FMCW-LiDAR-Sensor vorgesehen sein, der einen weiteren Überwachungsbereich abtastet, wobei sich die Überwachungsbereiche überlappen können. Dadurch können Abschattungen oder tote Winkel, in denen keine Objekterfassung möglich ist, vermieden werden. Werden zwei oder mehrere FMCW-LiDAR-Sensoren so zueinander angeordnet, dass orthogonal zueinanderstehende Messtrahlen erzeugt werden können, kann durch Verrechnung dieser Messstrahlenpaare ein Geschwindigkeitsvektor eines durch diese Messstrahlen abgetasteten Objekts in der durch die orthogonal zueinanderstehenden Messstrahlen aufgespannten Ebene bestimmt werden.

Der Sensor kann als Sicherheitssensor ausgelegt sein, beispielsweise im Sinne der Normen EN13849 für Maschinensicherheit und die Gerätenorm IEC61496 oder der EN61496 für berührungslos wirkende Schutzeinrichtungen (BWS). Der Sensor arbeitet dann besonders zuverlässig und erfüllt hohe Sicherheitsanforderungen, und kann eine redundante, diversitäre Elektronik, eine redundante Funktionsüberwachung oder eine spezielle Überwachung von Verschmutzungen optischer Bauteile aufweisen. Die Steuer- und Auswertungseinheit kann dann insbesondere dazu eingerichtet sein, Messpunkte zu Objekten zusammenzufassen, die nicht Teil des Flugzeugs sind, beispielsweise auf dem Vorfeld befindliche Personen oder Fahrzeuge, Merkmale dieser Objekte extrahieren, und beispielsweise bei Feststellung eines nicht autorisierten Objekts auf dem Vorfeld eine sicherheitsgerichtete Aktion auslösen, beispielsweise das Abgeben eines optischen und/oder akustischen Warnsignals. Damit kann die Vorrichtung zusätzlich zur Positionierung des Flugzeugs zur Vorfeldüberwachung eingesetzt werden.

Die Steuer- und Auswertungseinheit kann wenigstens einen digitalen Rechenbaustein aufweisen und in den Sensor integriert oder daran angeschlossen sein, etwa in Form einer übergeordneten Steuerung, die die Positionierungsinformation des Flugzeugs an das Flugzeug selbst übermittelt. Zumindest Teile der Funktionalität können auch in einem Remote-System oder einer Cloud implementiert sein.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1     ein Beispiel für eine Radialgeschwindigkeitsmessung mit einem FMCW-LiDAR-Sensor;

Fig. 2     eine schematische Darstellung einer erfindungsgemäßen Vorrichtung zur Erfassung eines Flugzeugs in einer Seitenansicht;

Fig. 3     eine schematische Darstellung einer erfindungsgemäßen Vorrichtung zur Erfassung eines Flugzeugs in einer Frontalansicht;

Fig. 4     ein Ablaufdiagramm für eine beispielhafte erfindungsgemäße Verarbeitung von Messdaten eines FMCW-LiDAR-Sensors.

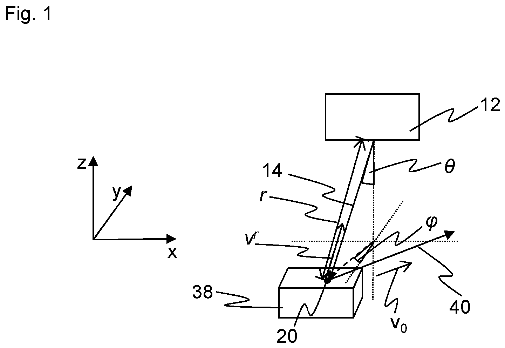

In Figur 1 ist das Konzept der Radialgeschwindigkeitsmessung mit einem FMCW-LIDAR-Sensor 12 an einem dreidimensionalen Beispiel gezeigt. Bewegt sich ein Objekt 38 mit einer Geschwindigkeit $v_0$ entlang einer

Bewegungsrichtung 40 relativ zum FMCW-LiDAR-Sensor 12, kann der FMCW-LiDAR-Sensor 12 neben dem Radialabstand $r$ und der Intensität I eines mit einem Sendelichtstrahl 14 unter einem Azimuthwinkel φ und einem Polarwinkel θ einmalig zeitdiskret abgetasteten Messpunkts 20 die Radialgeschwindigkeit $v^r$ des Messpunkts 20 des Objekts 38 in Richtung des FMCW-LiDAR-Sensors 12 bestimmen. Diese Information steht direkt mit einer Messung, also einer zeitdiskreten Abtastung des Messpunktes 20 zur Verfügung. Zur Identifikation bewegter Objekte entfällt somit im Unterschied zu Messverfahren, die lediglich ortsaufgelöste Radialabstände, also dreidimensionale Positionen, liefern, die Notwendigkeit einer zweiten Messung und insbesondere die Notwendigkeit, in den Messdaten der zweiten Messung zunächst die Messpunkte zu ermitteln, die den Messpunkten der ersten Messung entsprechen.

Im Falle eines statischen FMCW-LiDAR-Sensors ist jeder Messpunkt mit einer Radialgeschwindigkeit von Null in der Regel einem statischen Objekt zugeordnet, sofern sich dieses nicht tangential zum Messstrahl des Sensors bewegt. Aufgrund der endlichen Objektausdehnung und der hohen räumlichen Auflösung des FMCW-LiDAR-Sensors wird praktisch jedes bewegte Objekt wenigstens einen Messpunkt 20 mit einer von Null verschiedenen Radialgeschwindigkeit $v^r_n$ zum FMCW-LiDAR-Sensor 12 aufweisen. Daher lassen sich bereits mit einer Messung des FMCW-LiDAR-Sensors 12 statische und bewegte Objekte unterscheiden. So können beispielsweise bei einer Erfassung eines sich bewegenden Flugzeugs statische Objekte verworfen werden. Durch eine entsprechende Datenreduktion werden Rechenaufwände bei der weiteren Auswertung der Messdaten reduziert.

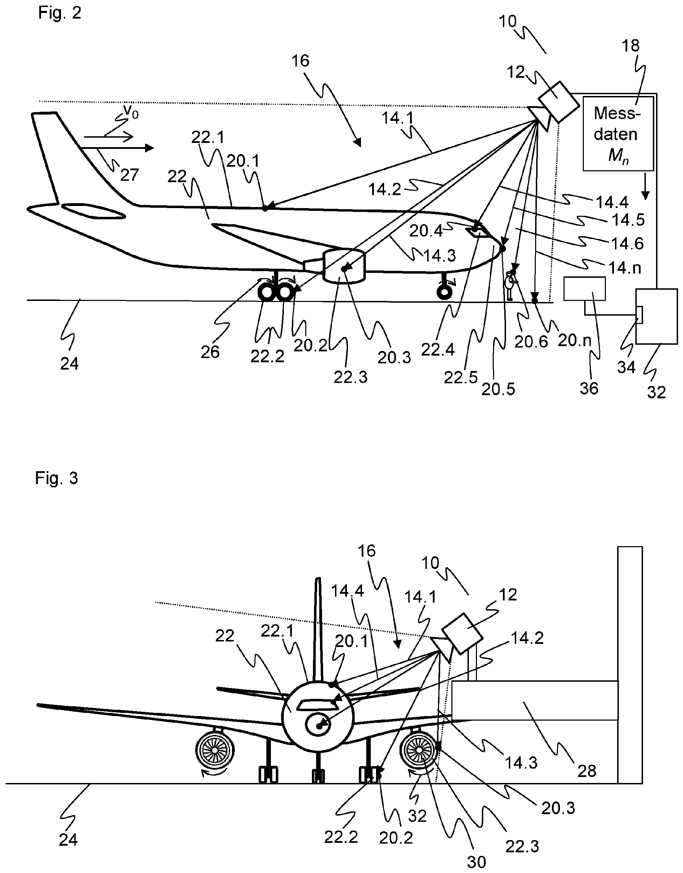

Figur 2 zeigt eine schematische Darstellung einer erfindungsgemäßen Vorrichtung 10 zur Positionierung eines in Seitenansicht dargestellten Flugzeuges 22 auf einem Vorfeld 24 eines Flughafens. Ein FMCW-LiDAR-Sensor 12 sendet Sendelichtstrahlen 14.1, ..., 14.n in einen dreidimensionalen Überwachungsbereich 16 im Vorfeld 24 aus und erzeugt Messdaten $M_n$ 18 aus von Messpunkten 20.1, ..., 20.n im Überwachungsbereich 16 zurück zum FMCW-LiDAR-Sensor 12 reflektiertem oder remittiertem Sendelicht. Zur Darstellung ist eine begrenzte Zahl beispielhafter Sendelichtstrahlen 14.1, ..., 14.n und Messpunkte 20.1, ..., 20.n gezeigt, die tatsächliche Anzahl ergibt sich durch die Größe des Überwachungsbereichs 16 und die räumliche Auflösung der Abtastung. Die Messpunkte 20.1, ..., 20.n können das im Überwachungsbereich 16 befindliche Flugzeug 22, aber auch Personen 26, Fahrzeuge (nicht gezeigt), oder das Vorfeld 24 selbst repräsentieren.

Die von einer Steuer- und Auswerteeinheit 32 empfangenen Messdaten $M_n$ 18 des FMCW-LiDAR-Sensors 12 umfassen für jede zeitdiskrete Abtastung neben den Radialabständen $r_n$ und den Intensitäten $I_n$, also der remittierten oder reflektierten Sendelichtmenge, insbesondere die Radialgeschwindigkeiten $v^r_n$ der Messpunkte 20.1, ..., 20.n, wobei mit Radialgeschwindigkeit $v^r_n$ die Geschwindigkeitskomponente eines Messpunkts 20.1, ..., 20.n bezeichnet wird, mit der sich der Messpunkt 20.1, ..., 20.n auf den FMCW-LiDAR-Sensor 12 zu oder vom FMCW-LiDAR-Sensor 12 weg bewegt.

Die Steuer- und Auswertungseinheit 32 weist wenigstens einen digitalen Rechenbaustein auf, beispielsweise wenigstens einen Mikroprozessor, wenigstens ein FPGA (Field Programmable Gate Array), wenigstens einen DSP (Digital Signal Processor), wenigstens ein ASIC (Application-Specific Integrated Circuit), wenigstens eine VPU (Video Processing Unit) oder wenigstens einen Neural Processor. Die Steuer- und Auswertungseinheit 32 kann überdies zumindest teilweise extern des FMCW-LiDAR-Sensors 12 vorgesehen sein, etwa in einer übergeordneten Steuerung, einem angeschlossenen Netzwerk, einem Edge-Device oder einer Cloud.

Die Messdaten $M_n$ 18 werden von der Steuer- und Auswerteeinheit 32 ausgewertet, wobei die Steuer- und Auswerteeinheit 32 dazu eingerichtet ist, die Messpunkte 20.1, ..., 20.n zu segmentieren, zumindest teilweise zu Segmenten des Flugzeugs 22, wie beispielsweise dem Rumpf 22.2, den Rädern 22.2 des Hauptfahrwerks, den Triebwerken 22.3, dem Cockpitfenster 22.4 oder der Flugzeugnase 22.5 zusammenzufassen, Merkmale der Segmente 22.1,....22.n zu extrahieren, die Segmente 22.1,...., 22.n anhand der extrahierten Merkmale einem Flugzeugtyp aus einer Vielzahl von Flugzeugtypen zuzuordnen und basierend auf dem zugeordneten Flugzeugtyp eine Positionierungsinformation für das Flugzeug 22 über eine Schnittstelle 34 der Steuer- und Auswerteeinheit 32 auszugeben. An der Schnittstelle 34 kann beispielsweise eine Ausgabeeinheit 36 angeschlossen sein, die einem Piloten die Positionierungsinformation beispielsweise in Form eines Abstandes zu einer typspezifischen Parkposition des Flugzeugs 22 anzeigt.

Die Steuer- und Auswerteeinheit 32 kann beispielsweise unter Verwendung der Radialgeschwindigkeiten $v^r_n$ der Messpunkte 20.1, ..., 20.n Bewegungsmuster der Objektsegmente 22.1, ..., 22.5 bestimmen, beispielsweise eine Rotation 26 der Räder 22.2 des Hauptfahrwerks, und die erfassten Bewegungsmuster zur Extraktion von Merkmalen der Segmente 22.1, ..., 22.n verwenden.

Die Steuer- und Auswerteeinheit 32 kann weiterhin unter Verwendung der Radialgeschwindigkeiten $v^r_n$ der Messpunkte 20.1, ..., 20.n eine Geschwindigkeit $v_0$ entlang einer Bewegungsrichtung 27 des Flugzeugs 22 bestimmen, beispielsweise unter Verwendung eines Verfahrens, wie es in der wissenschaftlichen Veröffentlichung "Doppler velocity-based algorithm for Clustering and Velocity Estimation of moving objects (Guo et al., 2022)" beschrieben wird.

Figur 3 zeigt eine schematische Darstellung der erfindungsgemäßen Vorrichtung 10 aus Figur 2, wobei das Flugzeug 22 in Frontalansicht gezeigt ist. Identische Teile sind mit identischen Bezugszeichen versehen. Der FMCW-Lidar-Sensor 12 ist an einer Fluggastbrücke 28 angeordnet.

Die Steuer- und Auswerteeinheit (hier nicht gezeigt) kann beispielsweise unter Verwendung der Radialgeschwindigkeiten $v^r_n$ von Messpunkten, die die Triebwerksschaufeln 30 des Triebwerks 22.3 erfassen, ein Bewegungsmuster der Triebwerksschaufeln 30 bestimmen, beispielsweise eine Rotation 32 der Triebwerksschaufeln 30. Da die Triebwerksschaufeln durch ihre Rotation ein sehr spezifisches Bewegungsmuster aufweisen, welches sich von Bewegungsmustern anderer Segmente des Flugzeugs 22 deutlich unterscheidet. Lässt sich die Position der Triebwerksschaufeln 30 beziehungsweise des Triebwerks 22.3 besonders zuverlässig erkennen.

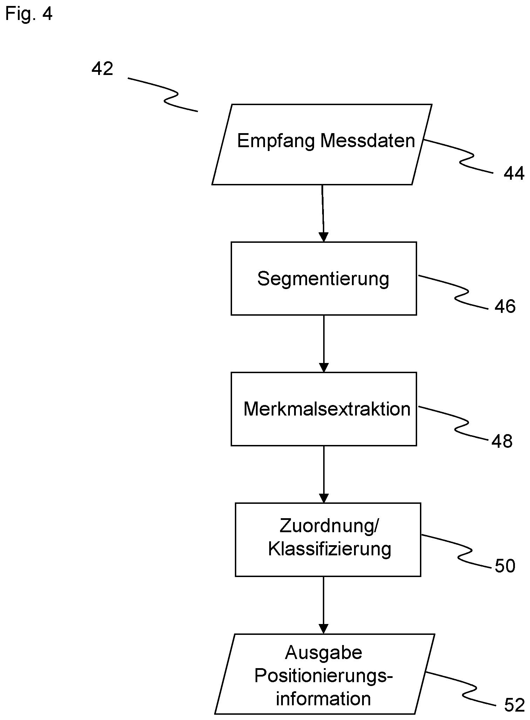

Figur 4 zeigt in einem Ablaufdiagramm 42 eine beispielhafte erfindungsgemäße Verarbeitung der vom FMCW-LiDAR-Sensor 12 erfassten Messdaten durch die Steuer- und Auswerteeinheit 32. Nach dem Empfang 44 der Messdaten werden in einem Segmentierungsschritt 46 die Messpunkte 20.1, ..., 20.n segmentiert und zu Segmenten 22.1, ..., 22.5, des Flugzeugs 22 zusammengefasst, wobei zusätzlich zu den üblicherweise zur Segmentierung 46 verwendeten Ortskoordinaten und Intensitäten der Messpunkte insbesondere die ortsaufgelösten Radialgeschwindigkeiten $v^r_n$ der Messpunkte 20.1, ..., 20.n berücksichtigt werden können. Segmente des Flugzeugs können beispielsweise der Rumpf 22.2, die Räder 22.2 des Hauptfahrwerks, die Triebwerke 22.3, das Cockpitfenster 22.4 oder die Flugzeugnase 22.5 sein.

Die Segmentierung 46 kann beispielsweise nach den oben genannten Verfahren der digitalen Bildverarbeitung beziehungswiese des maschinellen Sehens oder der "Range segmentation" erfolgen.

Durch die Verwendung der Radialgeschwindigkeit $v^r_n$ zusätzlich zum Radialabstand $r_n$ und der Intensität $I_n$ der Messpunkte 20.1, ..., 20.n kann die Segmentierung 46 der Messpunkte 20.1, ..., 20.n mit den oben aufgeführten Verfahren effizienter und genauer erfolgen. Beispielsweise können Messpunkte 20.1, ..., 20.n, mit Radialgeschwindigkeiten $v^r_n$ kleiner, größer oder gleich einem vorgegebenen Schwellenwert verworfen und keiner weiteren Auswertung zugeführt werden. Wird ein Objekt wie das Flugzeug 22 und/oder Objektsegment wie die Flugzeugnase 22.5 durch mehrere raumdiskrete Messpunkte abgetastet und sind die dazugehörigen Radialgeschwindigkeiten unterscheidbar, können statische und dynamische Objekte und/oder Objektsegmente unterschieden werden und so stationäre Objekte wie das Vorfeld 24, bereits vor beziehungsweise während der Segmentierung 46 der Messpunkte 20.1, ..., 20.n, verworfen und der Rechenaufwand durch Datenreduktion vermindert werden.

Im nächsten Schritt erfolgt eine Merkmalsextraktion 48 der während der Segmentierung 46 definierten Segmente 22.1, ..., 22.5. Typische Merkmale, die bei der Verarbeitung der Messdaten aus den Segmenten 22.1, ..., 22.5 extrahiert werden können, sind beispielsweise Breite, Anzahl der Messpunkte oder Länge des Umfangs der Segmente, oder weitere Merkmale, wie sie beispielsweise in der wissenschaftlichen Veröffentlichung "A Layered Approach to People Detection in 3D Range Data" (Spinello et al., Proceedings of the Twenty-Fourth AAAI Conference on Artificial Intelligence, AAAI 2010) beschrieben sind.

Nach der Merkmalsextraktion 48 erfolgt eine Zuordnung beziehungsweise Klassifikation 50 der Segmente 22.1, ..., 22.5 zu einem Flugzeugtyp aus einer Vielzahl von Flugzeugtypen mit bekannten Klassifizierungsverfahren wie beispielsweise Bayes-Klassifikatoren, Support Vector Machines oder künstlichen neuronalen Netzen. Im Rahmen der Zuordnung wird der Merkmalsraum nach Gruppen von Merkmalen durchsucht, die ein Segment 22.1, ..., 22.5 definieren.

Basierend auf dem Ergebnis der Klassifikation 50 kann auf Basis des identifizierten Flugzeugtyps eine Ausgabe 52 einer Positionierungsinformation für das Flugzeug 22 erfolgen. Die Positionierungsinformation kann dabei Informationen zur Entfernung und/oder Richtungsangaben zu einer flugzeugtypspezifischen Parkposition für das Flugzeug 22 enthalten und auf einer Anzeigeeinheit für eine Besatzung des Flugzeugs dargestellt werden.

**Patentansprüche**

1. Vorrichtung (10) zur Positionierung eines Flugzeuges (22) in einem Überwachungsbereich (16) eines Vorfelds (24) eines Flughafens mit wenigstens einem optoelektronischen Sensor (12) zum Aussenden von Sendelichtstrahlen (14, ..., 14.n) in den Überwachungsbereich (16), zum Abtasten einer Vielzahl von Messpunkten (20.1, ..., 20n) und zum Erzeugen von Messdaten (18) aus von den Messpunkten (20.1, ..., 20n) remittiertem oder reflektiertem Sendelicht,

   - einer Steuer- und Auswerteeinheit (32) zur Auswertung der Messdaten (18), wobei die Steuer- und Auswerteeinheit (32) dazu eingerichtet ist, die Messpunkte (20.1, ..., 20n) zu segmentieren, zumindest teilweise zu Segmenten (22.1, ..., 22.5) des Flugzeuges (22) zusammenzufassen, Merkmale der Segmente (22.1, ..., 22.5) zu extrahieren, die Segmente (22.1, ..., 22.5) anhand der extrahierten Merkmale einem Flugzeugtyp aus einer Vielzahl von Flugzeugtypen zuzuordnen und basierend auf dem zugeordneten Flugzeugtyp eine Positionierungsinformation für das Flugzeug (22) auszugeben,

   **dadurch gekennzeichnet, dass** der wenigstens eine optoelektronische Sensor (12) ein FMCW-LIDAR-Sensor ist, die Messdaten (18) Radialgeschwindigkeiten ($v^r_n$) der Messpunkte (20.1, ..., 20n) umfassen, und die Steuer- und Auswerteeinheit (32) dazu ausgebildet ist, unter Verwendung von Radialgeschwindigkeiten ($v^r_n$) von wenigstens einem ersten Segment (22.1, ..., 22.5) zugeordneten Messpunkten (20.1, ..., 20.5) eine Rotation oder eine Relativbewegung des ersten Segments (22.1, ..., 22.5) zum Flugzeug (22) selbst oder zu einem weiteren Segment (22.1, ..., 22.5) zu bestimmen.

2. Vorrichtung nach Anspruch 1, **dadurch gekennzeichnet, dass** die Steuer- und Auswerteeinheit (32) dazu ausgebildet ist, die Messpunkte (20.1, ..., 20n) unter Verwendung der Radialgeschwindigkeiten ($v^r_n$) der Messpunkte (20.1, ..., 20n) zu segmentieren.

3. Vorrichtung nach einem der vorhergehenden Ansprüche, **dadurch gekennzeichnet, dass** die Steuer- und Auswerteeinheit (32) dazu ausgebildet ist, die Messpunkte (20.1, ..., 20n) zumindest teilweise unter Verwendung der Radialgeschwindigkeiten ($v^r_n$) der Messpunkte (20.1, ..., 20n) zu Segmenten (22.1, ..., 22.5) des Flugzeuges (22) zuzuordnen.

4. Vorrichtung nach einem der vorhergehenden Ansprüche, **dadurch gekennzeichnet, dass** die Steuer- und Auswerteeinheit (32) dazu ausgebildet ist, Merkmale der Segmente (22.1, ..., 22.5) unter Verwendung der Radialgeschwindigkeiten ($v^r_n$) der den Segmenten (22.1, ..., 22.5) zugeordneten Messpunkte (20.1, ..., 20.5) zu extrahieren.

5. Vorrichtung nach einem der vorhergehenden Ansprüche, wobei die Steuer- und Auswerteeinheit (32) dazu ausgebildet ist, die Messpunkte (20.1, ..., 20n) unter Verwendung der Radialgeschwindigkeit ($v^r_n$) der Messpunkte (20.1, ..., 20n) zu filtern.

6. Vorrichtung nach einem der vorhergehenden Ansprüche, wobei die Steuer- und Auswerteeinheit (32) dazu ausgebildet ist, unter Verwendung der Radialgeschwindigkeit ($v^r_n$) der Messpunkte (20.1, ..., 20n) eine Geschwindigkeit ($v_0$) entlang einer Bewegungsrichtung (27) des Flugzeugs (22) zu bestimmen.

7. Vorrichtung nach einem der vorhergehenden Ansprüche, **dadurch gekennzeichnet, dass** der FMCW-LiDAR-Sensor dazu eingerichtet ist, polarisationsabhängige Intensitäten ($I_{\perp n}$, $I_{\parallel n}$,) des von den Messpunkten (20.1, ..., 20n) remittierten oder reflektierten Sendelichts zu erfassen und die Messdaten (18) die polarisationsabhängigen Intensitäten ($I_{\perp n}$, $I_{\parallel n}$,) umfassen.

8. Vorrichtung nach Anspruch 7, **dadurch gekennzeichnet, dass** die Steuer- und Auswerteeinheit (32) dazu ausgebildet ist, die Messpunkte (20.1, ..., 20n) unter Verwendung der polarisationsabhängigen Intensitäten ($I_{\perp n}$, $I_{\parallel n}$,) zu segmentieren und zumindest teilweise zu Segmenten (22.1, ..., 22.5) des Flugzeuges (22) zusammenzufassen.

9. Vorrichtung nach Anspruch 7, **dadurch gekennzeichnet, dass** die Steuer- und Auswerteeinheit (32) dazu ausgebildet ist, die Messpunkte (20.1, ..., 20n) unter Verwendung der polarisationsabhängigen Intensitäten ($I_{\perp n}$, $I_{\parallel n}$,) zu filtern.

10. Vorrichtung nach einem der vorhergehenden Ansprüche, wobei die Vorrichtung wenigstens einen weiteren FMCW-LiDAR-Sensor mit einem weiteren Überwachungsbereich aufweist und sich der Überwachungsbereich (16) mit dem weiteren Überwachungsbereich zumindest teilweise überschneidet.

11. Verfahren zur Erfassung eines Flugzeuges (22) in einem Überwachungsbereich (16) eines Vorfelds (24) eines Flughafens mit den Schritten:

   - Aussenden von Sendelichtstrahlen (14, 14.1, ..., 14.n) in den Überwachungsbereich (16) mit wenigstens einem FMCW-LiDAR-Sensor (12),
   - Abtasten einer Vielzahl von Messpunkten (20.1, ..., 20n) im Überwachungsbereich (16),
   - Erzeugen von Messdaten (18) aus von den Messpunkten (20.1, ..., 20n) remittiertem oder reflektiertem Sendelicht, wobei die Messdaten (18) Radialgeschwindigkeiten ($v^r_n$) der Messpunkte (20.1, ..., 20n) umfassen,
   - Segmentieren (46) der Messpunkte (20.1, ..., 20n) und zumindest teilweises Zusammenfassen der Messpukte (20.1, ..., 20.5) zu Segmenten (22.1, ..., 22.5) des Flugzeugs (22);
   - Extrahieren (48) von Merkmalen der Segmente (22.1, ..., 22.5);
   - Zuordnen (50) der Segmente (22.1, ..., 22.5) zu einem Flugzeugtyp aus einer Vielzahl von Flugzeugtypen anhand der extrahierten Merkmale;
   - Ausgeben einer Positionierungsinformation für das Flugzeug (22) basierend auf dem zugeordneten Flugzeugtyp,
   **gekennzeichnet durch** den weiteren Schritt
   - Bestimmen einer Rotation oder einer Relativbewegung wenigstens eines ersten Segments (22.1, ..., 22.5) zum Flugzeug (22) selbst oder zu einem weiteren Segment (22.1, ..., 22.5) unter Verwendung der Radialgeschwindigkeiten ($v^r_n$) der dem ersten Segment (22.1, ..., 22.5) zugeordneten Messpunkte (20.1, ..., 20.5).

12. Verfahren nach Anspruch 11, wobei das Segmentieren (48) der Messpunkte (20.1, ..., 20n) und das zumindest teilweise Zuordnen der Messpukte (20.1, ..., 20.5) zu den Objektsegmenten (22.1, ..., 22.5) unter Verwendung der Radialgeschwindigkeiten ($v^r_n$) der Messpunkte (20.1, ..., 20n) erfolgt.

13. Verfahren nach einem der Ansprüche 11 oder 12 mit dem weiteren Schritt:

> - Filtern der Messpunkte (20.1, ..., 20n) unter Verwendung der Radialgeschwindigkeiten ($v^r_n$) der Messpunkte (20.1, ..., 20n).

**Claims**

1. Device (10) for positioning an aircraft (22) in a monitoring area (16) of an apron (24) of an airport with at least one optoelectronic sensor (12) for emitting beams of transmitting light (14, ..., 14.n) into the monitoring area (16), for scanning a multitude of measurement points (20.1, ..., 20n) and for generating measurement data (18) from transmitting light emitted or reflected from the measurement points (20.1, ..., 20n),

> - a control and evaluation unit (32) for the evaluation of the measurement data (18), wherein the control and evaluation unit (32) is configured to segment the measurement points (20.1, ..., 20n), to combine the measurement points (20.1, ..., 20n) at least partially into segments (22.1, ..., 22.5) of the aircraft (22), to extract characteristics of the segments (22.1, ..., 22.5), to assign the segments (22.1, ..., 22.5) to an aircraft type selected from a multitude of aircraft types on the basis of the extracted characteristics and to output a positioning information for the aircraft (22) on the basis of the assigned aircraft type.

> **characterized in that** the at least one optoelectronic sensor (12) is an FMCW LIDAR sensor, the measurement data (18) include radial velocities ($v^r_n$) of the measurement points (20.1, ..., 20n), and the control and evaluation unit (32) is designed to use radial velocities ($v^r_n$) of measurement points (20.1, ..., 20.5) assigned to at least one first segment (22.1, ..., 22.5) to determine a rotation or relative motion of at least one first segment (22.1, ..., 22.5) to the aircraft (22) itself or to a further segment (22.1, ..., 22.5).

2. The device according to claim 1, **characterized in that** the control and evaluation unit (32) is configured to segment the measurement points (20.1, ..., 20n) using the radial velocities ($v^r_n$) of the measurement points (20.1, ..., 20n).

3. The device according to any one of the preceding claims, **characterized in that** the control and evaluation unit (32) is configured to assign the measurement points (20.1, ..., 20n) to segments (22.1, ..., 22.5n) of the aircraft (22), at least partially using the radial velocities ($v^r_n$) of the measurement points (20.1, ..., 20n).

4. The device according to any one of the preceding claims, **characterized in that** the control and evaluation unit (32) is configured to extract features of the segments (22.1, ..., 22.5) using the radial velocities ($v^r_n$) of the measurement points (20.1, ..., 20.5). assigned to the segments (22.1, ..., 22.5).

5. The device according to any of the preceding claims, wherein the control and evaluation unit (32) is designed to filter the measurement points (20.1, ..., 20n) using the radial velocity ($v^r_n$) of the measurement points (20.1, ..., 20n).

6. The device according to any one of the preceding claims, wherein the control and evaluation unit (32) is configured to determine a velocity ($v_0$) along a direction of motion (27) of the aircraft (22) using the radial velocity ($v^r_n$) of the measurement points (20.1, ..., 20n).

7. The device according to any one of the preceding claims, **characterized in that** the FMCW LiDAR sensor is configured to detect polarization-dependent intensities ($I\perp n$, $I\mathbin{/\mkern-5mu/} n$) of the transmitting light remitted or reflected from the measurement points (20.1, ..., 20n) and the measurement data (18) comprise the polarization-dependent intensities ($I\perp n$, $I\mathbin{/\mkern-5mu/} n$).

8. The device according to claim 7, **characterized in that** the control and evaluation unit (32) is configured to segment the measurement points (20.1, ..., 20n) using the polarization-dependent intensities ($I\perp n$, $I\mathbin{/\mkern-5mu/} n$) and to at least partially combine the measurement points (20.1, ..., 20n) into segments (22.1, ..., 22.5) of the aircraft (22).

9. The device according to claim 7, **characterized in that** the control and evaluation unit (32) is configured to filter the measurement points (20.1, ..., 20n) using the polarization-dependent intensities ($I\perp n$, $I\mathbin{/\mkern-5mu/} n$).

10. The device according to any one of the preceding claims, wherein the device comprises at least one further FMCW LiDAR sensor with a further monitoring area and the monitoring area (16) overlaps at least partially with the further monitoring area.

11. Method for detecting an aircraft (22) in a monitoring area (16) of an apron (24) of an airport with the steps of:

- emitting transmitting light beams (14, 14.1, ..., 14.n) into the monitoring area (16) with at least one FMCW LiDAR sensor (12),
- scanning a multitude of measurement points (20.1, ..., 20n) in the monitoring area (16),
- generating measurement data (18) from transmitting light emitted or reflected from the measurement points (20.1, ..., 20n), wherein the measurement data (18) include radial velocities ($v^r_n$) of the measurement points (20.1, ..., 20n),
- segmenting (46) the measurement points (20.1, ..., 20n) and at least partially combining the measurement points (20.1, ..., 20.5) into segments (22.1, ..., 22.5) of the aircraft (22);
- extracting (48) features of the segments (22.1, ..., 22.5);
- assigning (50) the segments (22.1, ..., 22.5) to an aircraft type selected from a multitude of aircraft types based on the extracted features;
- outputting a positioning information for the aircraft (22) based on the assigned aircraft type, **characterized by** the further step
- determining a rotation or relative motion of at least one first segment (22.1, ..., 22.5) to the aircraft (22) itself or to a further segment (22.1, ..., 22.5) using the radial velocities ($v^r_n$) of the measurement points (20.1, ..., 20.5) assigned to the first segment (22.1, ..., 22.5).

12. The method of claim 11, wherein the segmenting (48) of the measurement points (20.1, ..., 20n) and the at least partial combining of the measurement points (20.1, ..., 20.5) to the object segments (22.1, ..., 22.5) is carried out using the radial velocities ($v^r_n$) of the measurement points (20.1, ..., 20n).

13. A method according to any one of claims 11 or 12 having the further step of:

- filtering the measurement points (20.1, ..., 20n) using the radial velocities ($v^r_n$) of the measurement points (20.1, ..., 20n).

**Revendications**

1. Dispositif (10) pour positionner un avion (22) dans une zone de surveillance (16) d'une aire de trafic (24) d'un aéroport avec au moins un capteur optoélectronique (12) pour émettre des faisceaux lumineux (14, ..., 14.n) dans la zone de surveillance (16), pour balayer une pluralité de points de mesure (20.1, ..., 20n) et pour générer des données de mesure (18) à partir de la lumière émise ou réfléchie par les points de mesure (20.1, ..., 20n),

- une unité de commande et d'évaluation (32) pour l'évaluation des données de mesure (18), dans laquelle l'unité de commande et d'évaluation (32) est configurée pour segmenter les points de mesure (20.1, ..., 20n), pour combiner les points de mesure (20.1, ..., 20n) au moins partiellement en segments (22.1, ..., 22.5) de l'avion (22), pour extraire les caractéristiques des segments (22.1, ..., 22.5), pour attribuer les segments (22.1, ..., 22.5) à un type d'avion à partir d'une pluralité de types d'avions sur la base des caractéristiques extraites et de produire une information de positionnement de l'avion (22) sur la base du type d'avion attribué **caractérisé en ce qu'**au moins un des capteurs optoélectroniques (12) est un capteur LIDAR FMCW, que les données de mesure (18) comprennent les vitesses radiales ($v^r_n$) des points de mesure (20.1, ..., 20n), et que l'unité de commande et d'évaluation (32) est configurée pour déterminer une rotation ou un mouvement relatif du premier segment (22.1, ..., 22.5) par rapport à l'avion lui-même ou à un autre segment (22.1, ..., 22.5) en utilisant les vitesses radiales ($v^r_n$) des points de mesure (20.1, ..., 22.5) attribués à au moins un premier segment (22.1, ..., 22.5).

2. Dispositif selon la revendication 1, **caractérisé en ce que** l'unité de commande et d'évaluation (32) est configurée pour segmenter les points de mesure (20.1, ..., 20n) en utilisant les vitesses radiales ($v^r_n$) des points de mesure (20.1, ..., 20n).

3. Dispositif selon l'une des revendications précédentes, **caractérisé en ce que** l'unité de commande et d'évaluation (32) est configurée pour attribuer les points de mesure (20.1, ..., 20n) au moins partiellement en segments (22.1, ..., 22.5n) de l'avion (22), en utilisant les vitesses radiales ($v^r_n$) des points de mesure (20.1, ..., 20n).

4. Dispositif selon l'une des revendications précédentes, **caractérisé en ce que** l'unité de commande et d'évaluation (32) est configurée pour extraire les caractéristiques des segments (22.1, ..., 22.5) en utilisant les vitesses radiales ($v^r_n$) des points de mesure (20.1, ..., 20.5) attribués aux segments (22.1, ..., 22.5).

5. Dispositif selon l'une des revendications précédentes, dans lequel l'unité de commande et d'évaluation (32) est configurée pour filtrer les points de mesure (20.1, ..., 20n) en utilisant la vitesse radiale ($v^r_n$) des points de mesure (20.1, ..., 20n).

6. Dispositif selon l'une des revendications précédentes, dans lequel l'unité de commande et d'évaluation (32) est configurée pour déterminer une vitesse *(v0)* le long d'une direction de mouvement (27) de l'avion (22) en utilisant la vitesse radiale ($v^r_n$) des points de mesure (20.1, ..., 20n).

7. Dispositif selon l'une des revendications précédentes, **caractérisé en ce que** le capteur LiDAR FMCW est configuré pour détecter les intensités dépendantes de la polarisation ($I{\perp}n, I{\parallel}n$) de la lumière émise ou réfléchie par les points de mesure (20.1, ..., 20n) et les données de mesure (18) comprennent les intensités dépendantes de la polarisation ($I{\perp}n, I{\parallel}n$).

8. Dispositif selon la revendication 7, **caractérisé en ce que** l'unité de commande et d'évaluation (32) est configurée pour segmenter les points de mesure (20.1, ..., 20n) en utilisant les intensités dépendantes de la polarisation ($I{\perp}n, I{\parallel}n$) et les combiner au moins partiellement en segments (22.1, ..., 22.5) de l'avion (22).

9. Dispositif selon la revendication 7, **caractérisé en ce que** l'unité de commande et d'évaluation (32) est configurée pour filtrer les points de mesure (20,1, ..., 20n) en utilisant les intensités dépendantes de la polarisation ($I{\perp}n, I{\parallel}n$).

10. Dispositif selon l'une des revendications précédentes, dans lequel le dispositif comprend au moins un autre capteur LiDAR FMCW avec une zone de surveillance supplémentaire et la zone de surveillance (16) chevauche au moins partiellement la zone de surveillance supplémentaire.

11. Procédé de détection d'un avion (22) dans une zone de surveillance (16) d'une aire de trafic (24) d'un aéroport avec les étapes:

    - l'émission des faisceaux lumineux (14, 14.1, ..., 14.n) dans la zone de surveillance (16) avec au moins un capteur LiDAR FMCW (12),
    - le balayage d'une pluralité de points de mesure (20.1, ..., 20n) dans la zone de surveillance (16),
    - la génération des données de mesure (18) à partir de la lumière émise ou réfléchie par les points de mesure (20.1, ..., 20n), dans lequel les données de mesure (18) incluent les vitesses radiales ($v^r_n$) des points de mesure (20.1, ..., 20n),
    - la segmentation (46) des points de mesure (20.1, ..., 20n) et la combinaison d'au moins partiellement des points de mesure (20.1, ..., 20.5) en segments (22.1, ..., 22.5) de l'avion (22) ;
    - l'extraction (48) des caractéristiques des segments (22.1, ..., 22.5) ;
    - l'attribution (50) des segments (22.1, ..., 22.5) à un type d'avion sélectionné parmi une pluralité de types d'avion sur la base des caractéristiques extraites;
    - la production d'une information de positionnement pour l'avion (22) sur la base du type d'avion attribué,
    **caractérisée par** l'étape suivant
    - la détermination d'une rotation ou d'un mouvement relatif d'au moins un premier segment (22.1, ..., 22.5) par rapport à l'avion (22) lui-même ou à un autre segment (22.1, ..., 22.5) en utilisant les vitesses radiales ($v^r_n$) des points de mesure (20.1, ..., 20.5) attribués au premier segment (22.1, ..., 22.5).

12. Procédé selon la revendication 11, dans lequel la segmentation (48) des points de mesure (20.1, ..., 20n) et l'attribution au moins partielle des points de mesure (20.1, ..., 20.5) aux segments d'objet (22.1, ..., 22.5) sont effectuées en untilisant les vitesses radiales ($v^r_n$) des points de mesure (20.1, ..., 20n).

13. Procédé selon l'une des revendications 11 ou 12 avec l'étape suivante:

    - le filtrage des points de mesure (20.1, ..., 20n) en utilisant les vitesses radiales ($v^r_n$) des points de mesure (20.1, ..., 20n).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4301637 C2
- EP 2109065 B1
- US 7702453 B2
- EP 1015313 B1
- US 20220066025 A1
- EP 4030188 A1
- US 2022137227 A1
- EP 3757968 A1


**In der Beschreibung aufgeführte Nicht-Patentliteratur**

- **BOGOSLAVSKYI et al.** Fast Range Image-Based Segmentation of Sparse 3D Laser Scans for Online Operation. *2016 IEEE/RSJ International Conference on Intelligent Robots and Systems*
- **BEHLEY et al.** Laser-based segment classification using a mixture of bag-of-words. *2013 IEEE/RSJ International Conference on Intelligent Robots and Systems*
- **DOUILLARD et al.** On the segmentation of 3d lidar point clouds. *2011 IEEE International Conference on Robotics and Automation*
- **GUO, YULAN et al.** Deep learning for 3d point clouds: A survey.. *IEEE transactions on pattern analysis and machine intelligence*, 2020, vol. 43 (12), 4338-4364
- **LANG, ALEX H. et al.** Pointpillars: Fast encoders for object detection from point clouds.. *Proceedings of the IEEE/CVF conference on computer vision and pattern recognition*, 2019
- **YAN, YAN** ; **YUXING MAO** ; **BO LI**. Second: Sparsely embedded convolutional detection.. *Sensors*, 2018, vol. 18 (10), 3337
- **PIERROTTET, D.** ; **AMZAJERDIAN, F.** ; **PETWAY, L.** ; **BARNES, B.** ; **LOCKARD, G.** ; **RUBIO, M.** Linear FMCW Laser Radar for Precision Range and Vector Velocity Measurements. *MRS Proceedings, 1076, 1076-K04-06*, 2008
- Realization of Integrated Coherent LiDAR. **T. KIM**. Doktorarbeit. University of California, 2019